Europäisches Patentamt

European Patent Office

Office européen des brevets

(11) Publication number: **0 132 654 B1**

(12) **EUROPEAN PATENT SPECIFICATION**

(45) Date of publication of patent specification: **08.09.93** (51) Int. Cl.⁵: **C03B 3/00**, C03B 5/235, C03B 5/12, C03B 5/14

(21) Application number: **84107897.5**

(22) Date of filing: **06.07.84**

(54) Two stage batch liquefaction process and apparatus.

(30) Priority: **25.07.83 US 516817**
**03.08.83 US 519949**
**03.08.83 US 519950**

(43) Date of publication of application:
**13.02.85 Bulletin 85/07**

(45) Publication of the grant of the patent:
**08.09.93 Bulletin 93/36**

(84) Designated Contracting States:
**AT BE CH DE FR GB IT LI LU NL SE**

(56) References cited:
**EP-A- 0 071 110**
**DE-C- 930 946**
**GB-A- 334 720**
**US-A- 3 607 190**

(73) Proprietor: **PPG INDUSTRIES, INC.**
**One PPG Place**
**Pittsburgh Pennsylvania 15272(US)**

(72) Inventor: **Demarest, Henry Martin, Jr.**
**1208 Cambridge Street**
**Natrona Heights Pennsylvania 15065(US)**
Inventor: **Kunkle, Gerald Erasmus**
**227 Argonne Drive**
**New Kensington Pennsylvania 15068(US)**
Inventor: **Matesa, Joseph Michael**
**3230 New Texas Road**
**Plum Boro Pennsylvania 15239(US)**

(74) Representative: **Sternagel, Hans-Günther, Dr. et al**
**Patentanwälte Dr. Michael Hann Dr. H.-G. Sternagel Sander Aue 30**
**D-51465 Bergisch Gladbach (DE)**

EP 0 132 654 B1

**Description**

This invention relates to converting pulverulent raw materials into a liquefied state as a first step in a melting process. The invention is particularly applicable to melting glass, including flat glass, container glass, fiber glass and sodium silicate glass. But the invention is applicable to other processes that involve thermally converting a generally flowable, essentially solid state feed material into a molten fluid. These other processes may include metallurgical melting type operations and fusing of single or multiple component ceramics, metals or other materials.

It has long been recognized that exhaust gas from a combustion heated glass melting furnace or other melting process furnace contains large amounts of thermal energy that can be recovered to improve the overall efficiency of the process. Conventionally, regenerators and recuperators have been employed to recover heat from melting process furnaces but their efficiency is less than would be desired. Furthermore, regenerators and recuperators are large, costly and susceptible to deterioration. Instead of preheating combustion air by way of regenerators or recuperators, it has been proposed to recover waste heat by means of the feed material. These proposals have been hampered by the fact that some particulate feed materials tend to become entrained in the exhaust gas stream. To overcome this problem, it has been proposed to agglomerate (e.g., pelletize) fine feed materials and to contact the agglomerated feed materials with the exhaust gas stream. However, it has been found that the cost of agglomerating feed materials can significantly diminish the economic advantages of heat recovery, and in some cases the entrainment of particulates is not entirely avoided by the use of agglomerated batch materials. Accordingly, one aspect of the present invention relates to recovering waste heat by preheating the batch materials while avoiding the drawbacks described above.

Dusting of dry pulverulent batch materials is also a problem when feeding the batch materials to a conventional melting furnace. It is a common expedient to overcome this problem by wetting the botch (e.g., with water). But, preheating the batch to any significant extent precludes maintaining the batch in a wetted condition.

Although waste heat from melting furnaces is often available at temperatures that could effect useful reactions in the batch materials, preheating of batch materials is often limited to lower temperatures because at higher temperatures the onset of melting of some batch materials can lead to clogging of the preheating apparatus. For example, it would be desirable to convert the carbonate batch materials typically employed in commercial glass melting operations to the respective oxides by preheating the batch to the calcining temperature of the materials, but heretofore, preheating has been generally considered limited to the relatively low melting temperature of the sodium carbonate component of the batch thereby precluding calcining of the calcium carbonate and magnesium carbonate constituents. Another aspect of the invention deals with overcoming this problem.

In EP-A-071 110 respectively in the corresponding US-A-4,381,934 of Kunkle and Matesa there is disclosed an intensified batch liquefying process in which large volumes of batch are efficiently liquefied in a relatively small space. This type of process, particularly when using intensified heat sources, produces relatively small volumes of exhaust gases.

There is also mentioned that preheated batch material may be fed to the process and if the batch is preheated by heat recovery from the exhaust gas stream, substantial energy savings can be attained.

US-A-3,607,190 is directed to a method and apparatus for preheating glass batch material in a rotary kiln by directing the effluent gas from the furnace to the preheater and combining combustion heat by a gas burner located at the discharge end of the kiln.

US-A-3,508,742 shows direct preheating of glass batch materials, maintaining temperatures below that at which calcining takes place. US-A-3,082,102 discloses prereacting pellets of glass batch and indicates that temperatures should be maintained below those at which sintering of the materials takes place.

It is the technological object of the invention to provide a method of converting pulverulant raw material into a liquefied state which is more efficient than the process disclosed in US-A-4,381,934 and which eliminates gases from the pulverulant batch 50 that these gases do not become subsequently entrapped in the melt.

This problem is solved by the method of liquefying pulverulent batch materials in a liquefying vessel by depositing through an opening in a lid covering the liquefying vessel batch materials which have been preheated by heat recovery from an exhaust gas stream onto a stable layer of batch surrounding a cavity within the liquefying vessel , providing heat of combustion to the cavity of the liquefying vessel by means of substantially nitrogen-free combustion of fuel with oxygen to liquefy the deposited batch materials and to permit the liquefied batch to flow over the stable batch layer to an exit opening from the liquefying vessel controlling the rate at which the batch materials are fed into the liquefying vessel so as to maintain the stable batch layer substantially constant,

**characterized by**

passing pulverulent batch materials into a preheating vessel , in the preheating vessel directly exposing the batch materials to said exhaust gas stream while agitating the batch materials so as to heat the batch materials, passing the heated batch materials from the preheating vessel through a batch feed chute positioned in said opening into the liquefying vessel , when melting of the batch has begun but before substantial adherence between batch particles has developed, and passing the exhaust gas stream from the liquefying vessel into the preheating vessel through an exhaust duct extending from said opening and having a nose pice directing the exhaust gas into an upper portion of the preheating vessel away from the batch materials and shadowing the preheating vessel from radiant heat transfer from the liquefying vessel , and using all of the high temperature products of combustion passed from the liquefying vessel to the preheating vessel as the only source of heat for preheating by said exhaust gas at a relatively slow rate so as to maximize transfer of heat from the exhaust gas to the batch materials and discharging the exhaust gas from the preheating vessel.

The invention further comprises an apparatus for liquefying pulverulent batch materials for carrying out the above method comprising as liquefying vessel a heated cavity encircled by a stable layer of batch materials and having an upper inlet opening in a stationary lid covering the liquefying vessel for depositing batch materials onto the stable batch layer and a lower outlet opening for draining liquefied batch from the liquefying vessel which is mounted for rotation about a substantially vertical axis,

**characterized in that**

the apparatus further comprises as preheating vessel a rotary kiln comprising an elongated inclined cylindrical vessel mounted for rotation about its cylindrical axis, means for feeding batch material to a first end of the rotary kiln and the batch liquefying vessel being positioned at the opposite end of the rotary kiln for depositing batch materials from the rotary kiln into the liquefying vessel , and a transition is provided between the rotary kiln and the liquefying vessel comprising a batch chute positioned in said opening and having a pivotable baffle positioned at the exit end of the chute and a nose piece extension of an exhaust duct , wherein the nose piece is positioned so that it directs the exhaust gases into an upper portion of the rotary kiln away from the batch materials and serves to shade the rotary kiln from radiant heat transfer from the liquefying vessel and said exhaust duct extending from said opening in the lid.

In a further embodiment of the apparatus for carrying out the method according to the invention, the exhaust duct comprises an adjustable damper in the exhaust passage of the transition section. Preferably, a pivotable diverting gate is provided at the entrance to the batch chute to divert batch materials to an escape chute.

In the present invention, particularly waste heat from a combustion fired melting process is recovered by passing the exhaust gas stream into direct contact with loose batch materials being fed to the melting process. The pulverulent batch materials are fed to a preheating vessel in a substantially dry, free-flowing condition and are preheated during agitation of the materials by tumbling the batch materials along the interior of an inclined rotating kiln.

Preferably the exhaust gas is discharged from the preheating vessel after the gas temperature is below the dew point of water vapor in the exhaust gas stream.

The slope of the rotary kiln is a acute angle with respect to horizontal and the batch materials subsequently are deposited onto the stable layer of batch whithin a liquefying vessel and are supported at least initially at an acute angle with respect to vertical.

The stable layer is a surface of revolution and is rotated about the cavity of the liquefying vessel.

The batch material is agitated in the preheating vessel by rotating the preheating vessel at a speed that imparts insufficient centrifugal force to the batch material to overcome gravity, and the liquefying vessel is rotated at a speed sufficient to retain a lining of batch materials on interior walls of the liquefying vessel by centrifugal force.

The batch material can include cullet.

In a preferred embodiment of the invention, carbonate containing batch materials are preheated to a calcining temperature so as to decompose the carbonates to oxides in the absence of relatively low melting temperature constituents of the batch which are fed in a separate stream to the melter. In a soda-lime glass melting operation, the materials subjected to the calcining preheating include limestone and/or dolomite, whereas the sodium source, such as soda ash and/or caustic soda, would bypass the calcining preheating. Sand may also be included in the portion of batch that is preheated to calcining temperatures. In the preferred embodiments, the combining of the batch portions is completed by a melting vessel that provides active mixing of the separate feed streams.

EP 0 132 654 B1

An advantage of the preferred embodiment of the invention is the solution of the problem of particulate batch materials being entrained in an exhaust gas stream when heat is being recovered by direct contact therebetween. By providing sufficient countercurrent contact between the exhaust gas and the batch materials, the temperature of the exhaust gas can be reduced to the dew point of the water in the products of the combustion, thereby producing a wet condition at the cold end of the heat recovery vessel. This wet condition his been found to cause entrapment of a substantial portion of particulates in the exhaust gas stream. This includes particulates from the melting vessel is well as particulates entrained from the batch during preheating. It is preferred to use oxygen wholly or partially in place of air in the combustion means heating the melting vessel, thereby reducing the volume of the exhaust gas stream. The lower exhaust gas volume, in turn, results in a greater concentration of water vapor per unit volume of exhaust gas, less entrainment of batch due to lower velocity of the exhaust gas stream, and a more effective wetting of the batch due to the higher dew point at the higher water vapor concentration.

The combustion means of the melting vessel is fired with oxygen rather than air, which results in substantial elimination of nitrogen from the exhaust gas stream Since nitrogen bubbles are relatively difficult to remove from molten glass, its elimination from the melting vessel is beneficial. Another aspect of the present invention involves in additional benefit from a substantially nitrogen-free exhaust gas stream, whereby preheating of batch materials by direct contact with the substantially nitrogen-free exhaust gas stream results in stripping of air from the batch materials, thereby preventing introduction of entrapped nitrogen into the melter.

Preheating batch materials in accordance with the present invention is particularly advantageous in combination with the ablation enhancing batch liquefying arrangements described in aforesaid US-A-4,381,934

Preheating batch reduces the heat requirement for liquefying the batch which theoretically should yield a greater throughput of a melter. But this theoretical advantage, may not be fully attained in a conventional melter because it has been found that a significant overall rate limiting step is the runoff of liquefied batch from the mass of batch being melted. The batch liquefication arrangements of US-A-4,381,934 are adapted to enhance this runoff or "ablation" of liquefied batch by providing a sloped melting surface and rapid, draining of the liquefied material, and thus these arrangements are particularly suited to take advantage of the higher throughputs that can be achieved by batch preheating. For those embodiments of the present invention that entail oxygen fired combustion, the batch liquefying arrangements of US-A-4,381,934.

In particular, those embodiments wherein a layer of batch encircles the heat source are well suited for use with the high temperatures produced by oxygen fired combustion. Oxygen firing in such an arrangement produces a relatively small volume, high temperature exhaust gas stream compared to a conventional glass melting furnace and this small volume, high temperature exhaust gas stream is particularly well suited for the heat recovery and emissions control purposes of the present invention. Other high temperature heat sources that substantially reduce the volume of nitrogen from the exhaust stream also lend themselves to the present invention.

The batch liquefying arrangements of US-A-4,381,934 are capable of receiving dry, pulverulent batch materials. Therefore, in accordance with the present invention, dry preheated batch may be fed directly to the liquefying stage.

The invention may also be characterized as a two stage batch liquefaction process wherein batch is transported relatively slowly in a first zone as it is heated to a temperature approaching incipient liquefaction and the batch is then transferred to a second zone where the preheated batch is deposited onto a sloped surface and rapidly liquefied by intense heating, whereby the liquefied batch flows out of the second zone. This process segregates the batch liquefaction operation into a pre-liquefaction stage and a liquefaction stage, and provides each stage with conditions that maximize the efficiency of each stage. In the first zone there are no essential time restraints in transferring heat to the batch as long as the batch remains freeflowing. Therefore, the first zone may be relatively extensive in size, may utilize relatively low grade heat, and preferably provides agitation to the batch in order to heat the batch throughout. The second stage is adapted to apply intense heat to the botch in a relatively small space to rapidly convert the batch to a liquefied state. Support for the batch in the second stage is steeply sloped so as to enhance rapid run-off and high throughput, thereby minimizing the size of the intensely heated zone. The first zone, on the other hand, preferably employs waste heat from the second zone, and therefore batch is conveyed through the first zone preferably at a relatively slow rate so as to maximize transfer of heat from the exhaust gas to the batch. The relatively slow material transport in the first stage can be maintained only so long as the batch remains freeflowing, because when the batch temperature approaches the melting point of one of its constituents the creation of a liquid phase results in cohesion between-batch particles, which in turn results in detrimental agglomerating of the batch, which can cause plugging of the first zone and uneven melting in

4

the second zone. Therefore, as the batch approaches this condition the batch is transferred to the steeply sloped support of the second zone and rapidly brought to the liquefied state.

In the preferred embodiment, both stages are rotating vessels. The second stage is characterized by speed of rotation of sufficient magnitude that centrifugal force on the batch is significant and serves to maintain the batch as a lining on the interior of the second stage vessel. The speed of rotation of the first stage vessel, on the other hand, is below that at which centrifugal force on the batch is significant, but merely produces tumbling of the batch. Other distinguishing characteristics of the two stages in at least some of the embodiments are that the first stage is heated primarily by convection, and that the second stage is heated primarily by radiation.

The Drawings

Figure 1 is a side elevation, partly broken away, of a preferred embodiment of a two-stage batch liquefaction arrangement in accordance with the present invention.

Figure 2 is a cross-section taken along line 2-2 of Figure 1.

Figure 3 is an enlarged cross-sectional view of the transition between first and second stages of the arrangement shown in Figure 1.

Figure 4 is a top elevational view of the arrangement of Figure 3 having elements removed for clarity.

In order to provide a more complete understanding of the invention, a specific preferred embodiment will be described in detail, which embodiment includes a rotary kiln preheater in combination with a rotary liquefying vessel. It should be understood that the concepts of the present invention are not limited to the specific apparatus described and that other preheating means and liquefying means may be employed. Also, while the present invention has been found to be particularly advantageous in the melting of glass and the detailed description will relate specifically to melting glass, the invention may be practiced with other materials that are thermally liquefied from a pulverulent feed material.

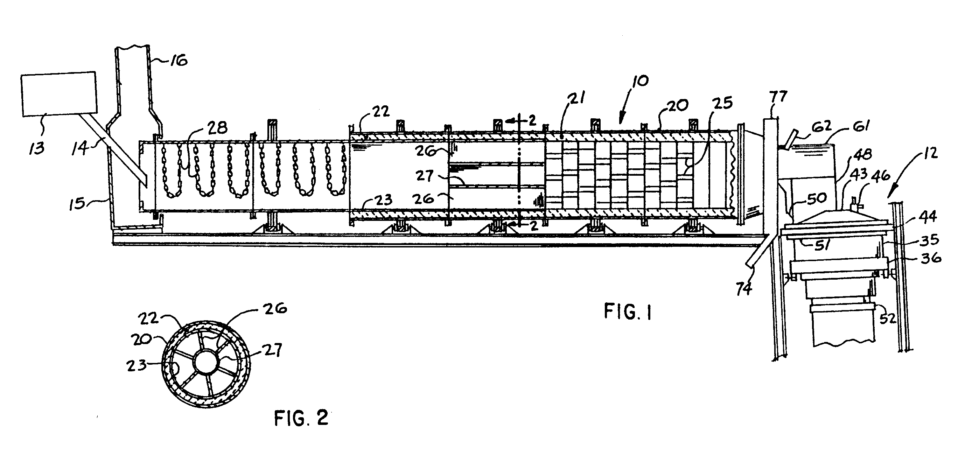

In Figure 1 there is shown a rotary kiln 10 passing batch and exhaust gases countercurrent to one another and feeding the preheated batch to a liquefaction vessel 12. Batch materials are fed to the inlet or "cold" end of the rotary kiln 10 from a continuous weighing and metering device 13 through a delivery tube 14. A single premixed stream of batch materials may be fed to the metering device 13, or individual constituents may be separately metered and delivered to the inlet of the rotary kiln, since the rotary kiln itself serves as a batch mixer. An example of a batch formula employed in the commercial manufacture of flat glass is the following:

| Sand | 1,000 parts by weight |
|---|---|
| soda ash | 313.5 |
| limestone | 84 |
| dolomite | 242 |
| rouge | 0.75 |

Other mineral sources are sometimes employed as alternatives or additives. Commonly, the batch also includes a substantial amount of cullet (scrap glass) typically on the order to 20 to 40 percent of the total batch weight. However, the process and apparatus disclosed can accommodate any amount of cullet, including 100 percent cullet. The above batch formula yields approximately the following glass:

| $SiO_2$ | 73.10 percent by weight |
|---|---|
| $Na_2O$ | 13.75 percent |
| $CaO$ | 8.85 percent |
| $MgO$ | 3.85 percent |
| $Al_2O_3$ | 0.10 percent |
| $Fe_2O_3$ | 0.10 percent |

The open end of the rotary kiln at the cold end is enclosed by an exhaust box 15 which directs exhaust gases leaving the rotary kiln to a duct 16. The duct 16 may lead to a fan (not shown) which provides the draft for drawing the exhaust gases through the rotary kiln and for discharging the exhaust gases to the atmosphere through a stack (not shown).

In those embodiments where calcining is to take place in the rotary kiln, the relatively low temperature constituents of the batch, such as the soda ash and the cullet, are not fed to the rotary kiln but are fed directly to the liquefaction vessel 12. Commercially available limestone and dolomite are not chemically pure or uniform, and therefore calcining of limestone and dolomite takes place over a range of temperatures, but a temperature above 870°C(1600°F) has been found desirable to effect thorough calcining. Soda ash with a melting temperature of 851°C (1564°F) is omitted from the materials passed through the rotary kiln when operating in the calcining mode to avoid melting of the soda ash which would cause the batch particles to adhere to one another. Caustic soda, which is sometimes substituted for soda ash as a source of sodium in glassmaking, likewise has a melting temperature below the preferred calcining temperatures, and thus it is excluded from the materials being fed through the rotary kiln to avoid forming a liquid phase at the hot end thereof when calcining. Calcining has the advantage of reducing the heat load on the liquefaction vessel, but calcining is also advantageous in that it eliminates chemically contained carbon dioxide from the melting materials before the batch materials are liquefied, thereby eliminating generation of carbon dioxide bubbles in molten glass. Accordingly, when the sodium source material is fed separately to the liquefaction vessel, it is preferred to employ the carbon dioxide-free caustic soda source rather than soda ash. Flat glass cullet begins to soften at around 650°C(1200°F) and therefore it, too, should bypass the calcining process. On the other hand, sand, the major ingredient of the batch raw materials, may advantageously accompany the limestone and dolomite through the rotary kiln at calcining temperatures. In addition to being preheated, it has been found that the sand assists in keeping the limestone and dolomite in a free-flowing condition. With the sodium source absent, a glass batch may be heated to about 1300°C (2400°F) without agglomerating the batch.

The rotary kiln 10 is generally of conventional design consisting basically of a cylindrical steel shell 20 mounted for rotation about the cylindrical axis which is inclined slightly from horizontal so as to convey the batch material from the cold end toward the hot end by gravity and tumbling. The residence time of material in the rotary kiln may be related to the basic kiln parameters in accordance with the following empirical relationship:

t = 19,3 L/NDS (t = 2.28 L/NDS in the event that diameter and length are expressed in feet and the slope is expressed in inches per foot)

where:

t = residence time, minutes
D = diameter, m
L = length, m
N = rotational speed, rpm
S = slope, cm per m

The residence time in the rotary kiln will depend upon the desired throughput of the melting operation and the amount of heat desired to be transferred from the exhaust gases to the solid materials. From these considerations and the above relationship, a suitable rotary kiln can be designed for the purposes of the present invention.

To prevent heat loss, the rotary kiln 10 is preferably insulated. The insulation may be a refractory wool blanket applied to the exterior of the steel shell 20, or the insulation may be in the form of a ceramic liner on the interior of the shell 20 as shown in portions of the rotary kiln depicted in Figure 1. The section of the rotary kiln near the hot end is shown provided with a refractory lining 21 which may be preferred for high-temperature durability in the hotter regions of the kiln, particularly when operating at calcining temperatures. Otherwise, it is preferred to provide a layer of insulation 22 between the outer steel casing 20 and an inner steel lining 23 as shown in the middle portion of the rotary kiln of Figure 1. Where thermal durability is not a concern, the steel lining is preferred for glassmaking because it has less of a tendency to erode contaminating materials into the throughput stream than does a refractory lining.

Heat transfer in the rotary kiln is influenced by agitation of, the batch materials which in turn is a function of the speed of rotation of the kiln, and it can be enhanced by the interior construction of the kiln. A wide variety of heat transfer improving baffle means are known to those skilled in the rotary kiln art and may be employed to advantage in the present invention. Several examples are illustrated in Figure 1. Arranged in spiral fashion around the interior of the kiln near the hot end are a plurality of lifters 25 which are ceramic projections (metal, in the case of a metal-lined section) extending radially inward from the inside walls of the kiln and which serve to lift the batch material and cause it to drop through the hot gases. Another example of a contact area extending arrangement is shown in a center section of the kiln 10 where a plurality of metal plates 26 extend radially between the metal liner 23 and a central tube 27 as can be seen in the

EP 0 132 654 B1

cross-sectional view of Figure 2. The cold end of the kiln is preferably festooned with a plurality of chains 28 which serve to break up any agglomerations of the batch that may occur in that section due to condensation of water vapor, to increase the area for heat exchange and act as wet entrailment collectors. The amount of agitation provided by baffle arrangements or speed of rotation should not be so great as to induce excessive amounts of entrainment of the batch in the exhaust gas stream. Another factor in minimizing entrainment is the diameter of the rotary kiln, which should be of sufficient magnitude to avoid, undue gas velocities at anticipated exhaust gas volume flow rates for a given operation.

The liquefaction stage 12 is of the type disclosed in US-A-4,381,934.

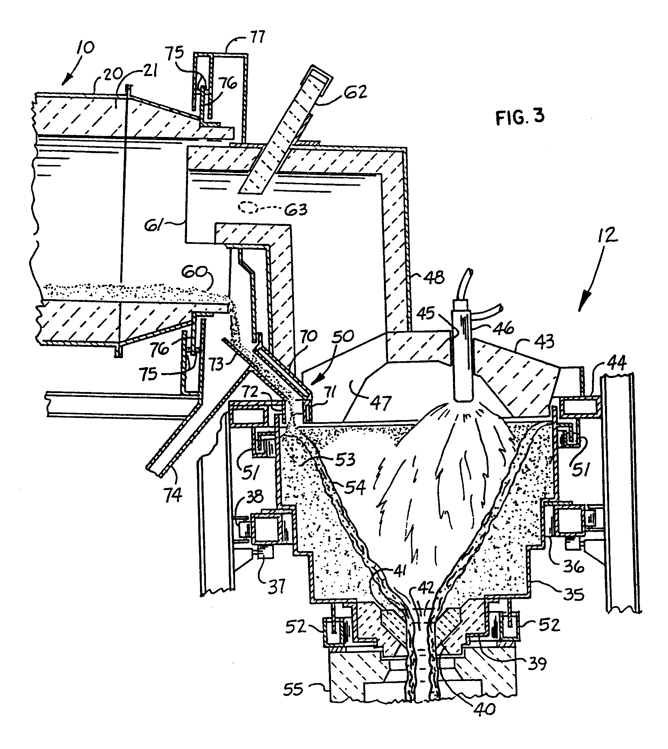

The preferred embodiment is that in which a stable layer of the batch material is rotated about a heated central cavity with a substantially vertical axis of rotation. The liquefaction means 12 shown here in the drawings is an improved version. The liquefaction vessel comprises a steel drum 35, which as shown in Figure 3 may be provided with stepped sides so as to decrease the amount of mass being rotated. The drum, however, could have straight cylindrical sides or it could be provided with a conical shape. The drum 35 is supported on a circular frame 36 which is, in turn, mounted for rotation about a generally vertical axis corresponding to the centerline of the drum on a plurality of support rollers 37 and aligning rollers 38. A bottom section 39 houses an outlet assembly which may be detached from the remainder of the drum. The housing 39 may be lined with an annulus of refractory material 40 such as castable refractory cement in which is seated a ring-like bushing 41 of erosion resistant refractory. The bushing 41 may be comprised of a plurality of cut pieces of ceramic. An open center 42 in the bushing 41 comprises the outlet opening from the liquefaction chamber. An upwardly domed refractory lid 43 is provided with stationary support by way of a circular frame member 44. The lid includes an opening 45 for inserting a burner 46. The burner 46 is preferably a wide angled multiport burner and is fired with oxygen and a gaseous fuel such as methane. In order to eliminate carbon dioxide from the system, the burner 46 could be fired with oxygen and hydrogen.

Exhaust gases escape upwardly through an opening 47 through the lid and into an exhaust duct 48. Batch materials are fed into the liquefaction vessel through the opening 47, and a feed chute 50 is provided for this purpose. Upper and lower water seals 51 and 52, respectively, may be provided to isolate the interior of the liquefaction chamber from the exterior ambient conditions and to trap any dust or vapors that may escape from the vessel.

Within the liquefaction vessel a stable layer of unmelted batch 53 is maintained on the walls of the drum 35 encircling the central cavity within which combustion takes place. The stable layer 53 may be initially, established in the desired paraboloid shape by feeding batch into the drum 35 as it rotates without being heated. This initial batch may be wetted with water to assist in establishing the stable layer. During melting, continuous feeding of batch through the chute 50 causes the batch to become distributed over the surface of the stable batch layer as the drum rotates. Heat from the burner 46 causes a transient layer 54 of the batch to become liquefied and to flow on the stable layer 53 downwardly through the bottom opening 42. The liquefied batch then flows out of the liquefaction vessel and may be collected in a vessel 55 below the liquefaction chamber for further processing as needed.

In at least the upper portions of the liquefaction chamber the transient layer of melting batch is supported at an acute angle to vertical. The particulate batch material has a frictional resistance to flowing down the slope, but as soon as the materials become liquefied by the thermal energy this resistance is substantially reduced and the liquefied material immediately flows downwardly and freshly fed batch material takes its place in the transient layer. The rotation of the liquefaction vessel helps maintain the sloped melting surface. The contour of the surface of the stable layer 53 can be estimated from the theoretical relationship between the speed of rotation and the shape assumed by loose dry batch as follows:

$$H = \mu R + (2\pi^2 \Omega^2 R^2)/g$$

where:

$H$ = the elevation of a point on the batch surface in the direction parallel to the axis of rotation;

$R$ = the radial distance of that point on the axis of rotation;

$\mu$ = a friction factor;

$\Omega$ = angular velocity; and

$g$ = the acceleration of gravity.

The friction factor may be taken as the tangent of the angle of repose, which for dry glass batch is typically about 35°. The above equation may be employed to select suitable dimensions far the rotary vessel at a selected speed of rotation, or conversely for determining a suitable speed of rotation for a given vessel.

7

The liquefied batch of the transient layer 54 flows on a support surface that is comprised substantially of only additional batch materials, and thus contaminating contact with refractories is avoided. Furthermore, because glass batch is a good heat insulator, providing the stable batch layer 53 with sufficient thickness protects any underlying support structure from thermal deterioration. Because the vessel can thus be protected thermally as well as from contact with corrosive molten materials, the materials requirements can be greatly relaxed, even permitting the use of mild steel for the drum 35. The economies thus achieved in furnace construction can be substantial. Furthermore, because the drum 35 is protected by the insulating effect of the stable batch layer, no cooling of the exterior is required, thereby avoiding extraction of useful heat from the melting process. Additionally because the insulating noncontaminating batch lining encircles the heated cavity, heat sources may be employed that operate at considerably higher temperatures than can be used in conventional refractory melting furnaces, e.g., oxygen fired combustion burners, plasma torches or electric arcs.

The temperature in which the batch becomes flowable will depend on the particular batch formula, especially the amount and melting temperature of the lowest melting temperature ingredients. A conventional flat glass batch containing soda ash has been found to liquefy at about 1090° C (2000° F) to 1150° C (2100° F). The liquefied material drains from the liquefaction vessel as soon as it reaches the fluid state, and therefore the fluid draining from the liquefaction zone has a nearly uniform temperature close to the liquefying temperature of the particular batch formula. Some additional heat is usually imparted to the liquefied material as it is flowing from the vessel, and therefore conventional flat glass batch is found typically to flow from the vessel et a temperature of about 1150° C (2100° F) to about 1260° C (2300° F). Because heat is transported out of the liquefaction vessel et the liquefying temperature, which is considerably lower than the temperatures attained in a conventional glass melter, the temperature of the liquefaction vessel may be maintained relatively low regardless of the temperature of the heat source. Accordingly, the advantage of greater heat fluxes afforded by higher temperature heat sources can be advantageously employed without providing exotic containment means. The use of the above-noted high temperature heat sources is also advantageous for the sake of reducing the volume of exhaust gases by elimination of airborne nitrogen. The absence of nitrogen also is favorable for preventing nitrogen bubbles in the glass. Optionally, use of a plasma torch with a suitable carrier gas can provide a carbon dioxide-free environment in the liquefaction chamber, particularly in combination with the use of calcined batch. A carbon dioxide-free environment may also be provided by the combustion of oxygen and hydrogen. Another advantage of nitrogen elimination is that the emissivity (i.e., the efficiency with which a gas radiates its thermal energy) of nitrogen is much lower than the emissivity of carbon dioxide and water. Therefore, excluding nitrogen avoids diluting the carbon dioxide and/or water produced by the combustion and intensifies the release of energy. It should be understood that the benefits of nitrogen exclusion can be attained by degrees, and that partial exclusion can yield useful improvements.

It is desirable for the thermal conductivity of the material employed as the stable layer 53 to be relatively low so that practical thicknesses of the layer may be employed while avoiding the need for wasteful forced cooling of the vessel exterior. In general, granular or pulverulent mineral source raw materials provide good thermal insulation, but in some cases it may be possible to use an intermediate or product of the melting process as a non-contaminating stable layer, e.g., in a glassmaking process pulverized cullet (scrap glass) could constitute the stable layer although a thicker layer would be required due to the higher conductivity of glass as compared to glass batch. In metallurgical processes on the other hand, using a metallic product as the stable layer would entail unduly large thicknesses to provide thermal protection to the vessel, but some ore materials may be satisfactory as insulating layers. The stable layer is preferably of essentially the same composition as the material being processed. However, it should be understood that precursor or derivative materials would be considered "essentially the same composition" in this context. In other words, the stable layer could be the raw material, the product material, an intermediate or a different form or mixture thereof as long as it melts or reacts to form a substance that does not introduce significant amounts of foreign constituents into the throughput stream. It should also be evident that this compositional requirement of the stable layer need apply only to surface portions that actually contact the throughput stream and to portions just under the surface that may occasionally erode into the throughput stream. Therefore, an equivalent arrangement might employ a different material in portions of the stable layer below the level at which erosion is likely to occur. Since this subsurface portion would serve primarily as insulation to protect the vessel, it could be composed of a material selected for its thermal insulating properties (e.g., sand or ceramic particles) although it should be sufficiently compatible compositionally to not contaminate the surface layer at the temperatures involved.

It should be understood that the terms "transient" and "stable" are relative, and that a distinct physical demarcation between the transient and stable layers may not always be identifiable. The use of the terms "transient" and "stable" is not intended to preclude the possibility that minor fluctuation of the interface therebetween may occur. The basic distinction is that the region that is described as the transient layer is characterized by melting and flowing, whereas the region termed the stable layer, in at least its major portion, does not participate in the melting and flowing of the throughput stream. Although the transient layer is said to be on the stable layer, one might theoretically define an intermediate layer therebetween, and it should be understood that that possibility is intended to be included.

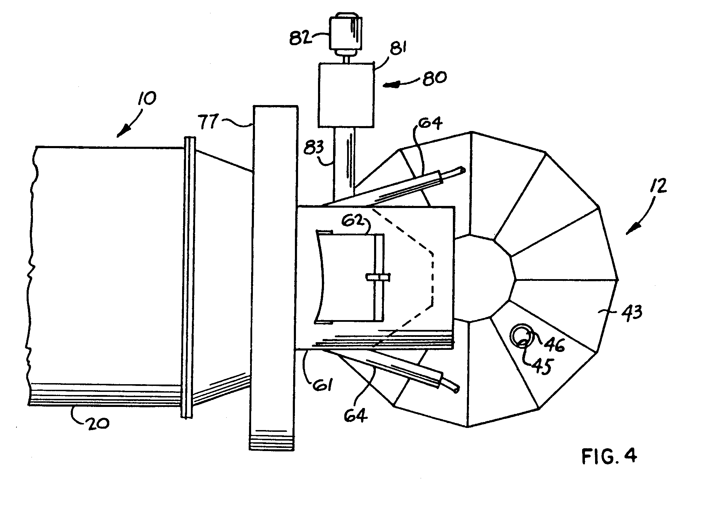

The arrangment of Figure 3, wherein the rotary kiln and the liquefaction vessel are somewhat separated from each other, is used. Putting the end of the rotary kiln in direct communication with the opening 47 of the liquefaction vessel has been found to cause caking of batch in the rotary kiln, probably due to radiant energy from the liquefaction vessel overheating the batch materials in the rotary kiln. This problem is overcome by providing a transition between the rotary kiln and the liquefaction chamber which comprises the chute 50 to carry batch therebetween and a nose piece extension 61 of the exhaust duct 48. The nose piece 61 directs the exhaust gases into an upper portion of the rotary kiln away from the glass batch 60 and serves to shade the rotary kiln from radiant heat transfer from the liquefaction vessel. An adjustable damper 62 may be provided in the exhaust passage of the transition section for the purpose of controlling the pressure in the liquefaction chamber. In the event that boosting the temperature of the exhaust gas is required for calcining the batch materials in the rotary kiln, the nose piece 61 may be provided with openings 63 (shown in phantom in Figure 3) for inserting auxiliary burners 64 (shown in Figure 4).

The batch chute 50 may be provided with a cool front plate 70 facing the exhaust gas stream so as to prevent the batch from becoming overheated and plugging the chute. Other features of the batch chute 50 include a pivotable water-cooled baffle 71 at the exit end of the chute, which serves to adjustably direct the falling batch onto the desired portion of the stable batch layer 53 in the liquefaction chamber. A ceramic plate 72 may also be provided at the exit end of the chute 50 so as to direct the falling batch away from the upper rim area of the drum 35. In the event of an emergency need to stop feeding batch material to the liquefaction chamber, a pivotable diverting gate 73 is provided at the entrance to the batch chute 50 and can be employed to divert the batch coming from the rotary kiln to an escape chute 74. A seal between the rotary kiln and the transition section may be provided by Teflon synthetic polymer or graphite seals 75 bearing against a circular fin 76 extending radially from the rotary kiln shell 20. The seal arrangement may be enclosed by an annular housing 77.

Referring to Figure 4 there is shown on auxiliary feeder 80 which may be provided to feed materials to the liquefaction chamber 12 which have not been preheated or have been preheated independently from the batch being preheated in the rotary kiln 10. For example, the auxiliary feeder 80 may be used to feed soda ash, caustic soda or cullet to the liquefaction chamber, particularly when the kiln is being used to calcine the calcium and/or magnesium carbonates. The auxiliary feeder 80 may be a conventional screw-type feeder comprised of a hopper 81, motor 82, and screw barrel 83 and may deposit materials through the opening 47 in the liquefaction chamber lid onto the upper edge of the stable batch layer 53. A plurality of auxiliary feeders similar to the feeder 80 may be employed if it is desired to feed a plurality of diverse materials separately at the entrance of the liquefaction chamber.

The slope of the rotary kiln may be selected in accordance with the desired residence time of the material in the rotary kiln, and appropriate support means could be provided to make the angle variable. However, it is preferred to provide a fixed inclination of about 2° (1° to 5°) with respect to horizontal and to control the residence time by varying the speed of rotation of the rotary kiln. The speed of rotation of the rotary kiln is in the range where the batch material tumbles in a lower portion of the rotary kiln without significant portions of the batch being carried by centrifugal force around the inner circumference of the kiln.

Glass batch at the hot end of the rotary kiln, when preheated to about 480°C(900°F), assumes a semi-tacky condition that resists dusting. Up to a temperature of about 760°C (1400°F) this tackiness does not lead to undesirable agglomerating or plugging. Glass batches without soda ash or an equivalent sodium source attain a similar condition when heated to the vicinity of the calcining temperature of the limestone and dolomite. This tacky condition is advantageous for feeding the batch to the liquefaction chamber with very little dusting. Also, it is advantageous that the onset of this tacky condition corresponds with the transfer of the batch from a substantially horizontal support in the rotary kiln to a nearly vertical support in the liquefaction chamber thereby assuring a continuous and uniform flow of material through the system.

The following is an example of an arrangement substantially as shown in the drawings and described hereinabove, wherein standard flat glass batch including soda ash was processed at a rate of 30 tons per day (27 metric tons per day). The rotary kiln was 15 m (49 feet) in length and had an inside diameter of 76 cm (2.5 foot). The internal area of the kiln was 46,6 m$^2$ (502 square feet). The rotary kiln was rotated at about 3 rpm and had an incline of 2°. The liquefaction vessel had an inside diameter of 130 cm (51 inches) and was rotated at about 32 rpm. The liquefaction chamber was heated by a burner fueled with methane and oxygen to produce a heat input of about 3 million BTU per hour (0.876 million watts) which produced an exhaust gas volume at standard temperature and pressure of 957 m$^3$/hour (33,792 cubic foot per hour). The exhaust gas entered the rotary kiln at 888°C (1631°F) and left the rotary kiln at 246°C(474°F). The glass batch was fed into the rotary kiln at 16°C(60°F) and was heated to 593°C (1100°F) in the rotary kiln. Liquefied batch flowing from the liquefaction chamber was at a temperature of 1236°C (2257°F).

**Claims**

1. Method of liquefying pulverulent batch materials in a liquefying vessel (12) by depositing through an opening (47) in a lid (43) covering the liquefying vessel (12) batch materials which have been preheated by heat recovery from an exhaust gas stream onto a stable layer (53) of batch surrounding a cavity within the liquefying vessel (12), providing heat of combustion to the cavity of the liquefying vessel (12) by means of substantially nitrogen-free combustion of fuel with oxygen to liquefy the deposited batch materials and to permit the liquefied batch to flow over the stable batch layer (53) to an exit opening (41, 42) from the liquefying vessel (12) controlling the rate at which the batch materials are fed into the liquefying vessel (12) so as to maintain the stable batch layer substantially constant,
**characterized by**
passing pulverulent batch materials into a preheating vessel (10), in the preheating vessel (10) directly exposing the batch materials to said exhaust gas stream while agitating the batch materials so as to heat the batch materials, passing the heated batch materials from the preheating vessel (10) through a batch feed chute (50) positioned in said opening (47) into the liquefying vessel (12), when melting of the batch has begun but before substantial adherence between batch particles has developed, and passing the exhaust gas stream from the liquefying vessel (12) into the preheating vessel (10) through an exhaust duct (48) extending from said opening (47) and having a nose pice (61) directing the exhaust gas into an upper portion of the preheating vessel (10) away from the batch materials and shadowing the preheating vessel (10) from radiant heat transfer from the liquefying vessel (12), and using all of the high temperature products of combustion passed from the liquefying vessel (12) to the preheating vessel (10) as the only source of heat for preheating by said exhaust gas at a relatively slow rate so as to maximize transfer of heat from the exhaust gas to the batch materials and discharging the exhaust gas from the preheating vessel (10).

2. The method of claim 1, wherein the exhaust gas is discharged from the preheating vessel (10) after the exhaust gas temperature is below the dew point of water vapor contained therein.

3. The method of claim 1, wherein the pulverulent batch materials are glass batch materials.

4. The method of claim 1, wherein the gases passed through the preheating vessel (10) are substantially free from nitrogen and purge entrapped nitrogen from the materials passing through the preheating vessel (10).

5. The method of claim 1, wherein the batch materials are conveyed through the preheating vessel (10) at an acute angle to horizontal with a controlled speed so that batch materials which have been heated to a temperature below that at which a melted phase causes adherence of batch particles to one another are removed from the preheating vessel (10) and deposited onto the stable batch layer (53) at an acute angle vertical in the liquefying vessel (12), wherein the rate of heat transferred to the batch is increased to raise its temperature so as to render the batch materials to a liquefied condition, whereupon the liquefied batch flows out of the liquefying vessel (12).

6. The method of claims 1 to 5, wherein a portion of the batch materials comprising a silica source material and a sodium source material is fed to the liquefying vessel (12), wherein another portion comprising a carbonate source material is fed to the preheating vessel (10) where the carbonate source material is heated to calcine at least a portion of the carbonate feeding the hot calcined material from the preheating vessel (10) to the liquefying vessel (12) and heating the calcined material with the silica source material and the sodium source material in the liquefying vessel (12) so as to liquefy the batch materials.

7. The method of claim 6, wherein silica source material is not directly fed to the liquefying vessel (12) but passed through the preheating vessel (10) so as to be heated along with the carbonate source material.

8. The method of claims 1 to 7, wherein the materials in the preheating vessel are heated to at least 870°C (1600°F).

9. The method of claims 1 to 8, wherein the glass batch materials include soda ash and the transfer from the preheating vessel (10) to the liquefying vessel (12) takes place when the batch has attained a temperature of about 480°C (900°F) to 760°C (1400°F).

10. The method of claims 1 to 9, wherein molten caustic soda is fed into the liquefying vessel (12).

11. Apparatus for liquefying pulverulent batch materials for carrying out the method of claim 1, comprising as liquefying vessel (12) a heated cavity encircled by a stable layer (53) of batch materials and having an upper inlet opening (47) in a stationary lid (43) covering the liquefying vessel (12) for depositing batch materials onto the stable batch layer (53) and a lower outlet opening (42) for draining liquefied batch from the liquefying vessel (12) which is mounted for rotation about a substantially vertical axis,
**characterized in that**
the apparatus further comprises as preheating vessel a rotary kiln (10) comprising an elongated inclined cylindrical vessel mounted for rotation about its cylindrical axis, means (13, 14) for feeding batch material to a first end of the rotary-kiln (10) and the batch liquefying vessel (12) being positioned at the opposite end of the rotary kiln for depositing batch materials from the rotary kiln (10) into the liquefying vessel (12), and a transition is provided between the rotary kiln (10) and the liquefying vessel (12) comprising a batch chute (50) positioned in said opening (47) and having a pivotable baffle (71) positioned at the exit end of the chute (50) and a nose piece extension (61) of an exhaust duct (48), wherein the nose piece (61) is positioned so that it directs the exhaust gases into an upper portion of the rotary kiln (10) away from the batch materials (60) and serves to shade the rotary kiln (10) from radiant heat transfer from the liquefying vessel (12) and said exhaust duct (48) extending from said opening (47) in the lid (43).

12. The apparatus of claim 11,
**characterized in that**
the exhaust duct (48) comprises an adjustable damper (62) in the exhaust passage of the transition section.

13. The apparatus of claim 11,
**characterized in that**
a pivotable diverting gate (73) is provided at the entrance to the batch chute (50) to divert batch materials to an escape chute (74).

**Patentansprüche**

1. Verfahren zum Verflüssigen pulverförmiger Gemengematerialien in einem Verflüssigungsbehälter (12) durch Ablagern durch eine Öffnung (47) in einem den Verflüssigungsbehälter (12) abdeckenden Deckel (43) von mittels Wärmerückgewinnung aus einem Abgasstrom vorerwärmter Gemengematerialien auf einer stabilen Schicht (53) von Gemenge, die einen Hohlraum im Verflüssigungsbehälter (12) umgibt, Erzeugen von Verbrennungswärme im Hohlraum des Verflüssigungsbehälters (12) durch Verbrennen von im wesentlichen stickstoffreiem Brennstoff mit Sauerstoff, um die abgelagerten Gemengematerialien zu verflüssigen und es dem verflüssigten Gemenge zu ermöglichen, über die stabile Gemengeschicht (53) zu einer Auslaßöffnung (41, 42) des Verflüssigungsbehälters (12) zu fließen, Steuern der Zuführgeschwindigkeit der Gemengematerialien in den Verflüssigungsbehälter (12), um die stabile Gemengeschicht im wesentlichen konstant zu halten,
**gekennzeichnet durch**
Einbringen pulverförmiger Gemengematerialien in einen Vorwärmkessel (10), direktes Aussetzen der Gemengematerialien dem Abgasstrom im Vorwärmkessel (10), während die Gemengematerialien zum Erwärmen gerührt werden, Überführen der erwärmten Gemengematerialien aus dem Vorwärmkessel (10) durch eine Gemengezuführrinne (50), die in der Öffnung (47) angeordnet ist, in den Verflüssigungsbehälter (12), sobald das Schmelzen des Gemenges begonnen hat, jedoch ehe sich eine wesentliche Haftung zwischen den Gemengeteilchen entwickelt hat, und Überführen des Abgasstromes aus dem Verflüssigungsbehälter (12) in den Vorwärmkessel (10) durch einen Abgasschacht (48), der sich Von der Öffnung (47) aus erstreckt und der ein Nasenteil (61) aufweist, das das Abgas in einen oberen Teil des Vorwärmkessels (10) weg von den Gemengematerialien lenkt und den Vorwärmkessel (10) gegen Übertragung von Strahlungswärme aus dem Verflüssigungsbehälter (12) abschirmt, und Verwenden aller Hochtemperaturprodukte der Verbrennung, die vom Verflüssigungsbehälter (12) zu dem Vorwärmkessel (10) überführt werden, als alleinige Wärmequelle zum Vorwärmen mittels des Abgases mit einer relativ geringen Geschwindigkeit, um den Wärmeübergang vom Abgas auf die Gemengematerialien zu maximieren, und Abziehen des Abgases aus dem Vorwärmkessel (10).

2.  Verfahren nach Anspruch 1,
    **dadurch gekennzeichnet**,
    daß das Abgas, nachdem die Abgastemperatur unter dem Taupunkt des darin enthaltenen Wasserdampfes ist, aus dem Vorwärmkessel (10) abgezogen wird.

3.  Verfahren nach Anspruch 1,
    **dadurch gekennzeichnet**,
    daß die pulverförmigen Gemengematerialien Glasgemengematerialien sind.

4.  Verfahren nach Anspruch 1,
    **dadurch gekennzeichnet**,
    daß die durch den Vorwärmkessel (10) hindurchgeleiteten Gase im wesentlichen frei von Stickstoff sind und den in den Materialien, die durch den Vorwärmkessel (10) hindurchgeleitet werden, eingeschlossenen Stickstoff aus dem Material spülen.

5.  Verfahren nach Anspruch 1,
    **dadurch gekennzeichnet**,
    daß die Gemengematerialien durch den Vorwärmkessel (10) unter einem spitzen Winkel zur Horizontalen mit einer gesteuerten Geschwindigkeit hindurchgefördert werden, so daß die Gemengematerialien, die bis unter eine Temperatur erhitzt wurden, bei der eine geschmolzene Phase das Aneinanderhaften der Gemengeteilchen verursacht, aus dem Vorwärmkessel (10) entfernt und unter einem spitzen Winkel zur Senkrechten auf der stabilen Gemengeschicht (53) im Verflüssigungsbehälter (12) abgelagert werden, wobei die Geschwindigkeit des Wärmeüberganges auf das Gemenge erhöht wird, um dessen Temperatur zu erhöhen, um die Gemengematerialien in einen flüssigen Zustand zu überführen, so daß das verflüssigte Gemenge aus dem Verflüssigungsbehälter (12) herausfließt.

6.  Verfahren nach Ansprüchen 1 bis 5,
    **dadurch gekennzeichnet**,
    daß ein Teil der Gemengematerialien, enthaltend ein Kieselsäurequellenmaterial und ein Natriumquellenmaterial, dem Verflüssigungsbehälter (12) zugeführt wird und ein anderer Teil, enthaltend ein Carbonatquellenmaterial, dem Vorwärmkessel (10) zugeführt wird, in dem das Carbonatquellenmaterial zum Kalzinieren mindestens eines Teils des Carbonats erwärmt wird, daß das heiße kalzinierte Material aus dem Vorwärmkessel (10) in den Verflüssigungsbehälter (12) überführt wird und das kalzinierte Material mit dem Kieselsäurequellenmaterial und dem Natriumquellenmaterial im Verflüssigungsbehälter (12) erwärmt wird, um die Gemengematerialien zu verflüssigen.

7.  Verfahren nach Anspruch 6,
    **dadurch gekennzeichnet**,
    daß das Kieselsäurequellenmaterial dem Verflüssigungsbehälter (12) nicht direkt zugeführt wird, sondern durch den Vorwärmkessel (10) hindurchgeleitet wird, um es zusammen mit dem Carbonatquellenmaterial zu erwärmen.

8.  Verfahren nach Ansprüchen 1 bis 7,
    **dadurch gekennzeichnet**,
    daß die Materialien im Vorwärmkessel auf mindestens 870 °C (1600 °F) erwärmt werden.

9.  Verfahren nach Ansprüchen 1 bis 8,
    **dadurch gekennzeichnet**,
    daß die Glasgemengematerialien Rohsoda enthalten und der Übergang vom Vorwärmkessel (10) in den Verflüssigungsbehälter (12) stattfindet, wenn das Gemenge eine Temperatur von etwa 480°C (900°F) bis 760°C (1400°F) erreicht hat.

**10.** Verfahren nach Ansprüchen 1 bis 9,
**dadurch gekennzeichnet**,
daß geschmolzenes Ätznatron dem Verflüssigungsbehälter (12) zugeführt wird.

**11.** Vorrichtung zum Verflüssigen von pulverförmigen Gemengematerialien zum Ausführen des Verfahrens nach Anspruch 1, enthaltend als Verflüssigungsbehälter (12) einen beheizten Hohlraum, der von einer stabilen Schicht (53) von Gemengematerialien umgeben ist und der eine obere Einlaßöffnung (47) in einem stationären Deckel (43), der den Verflüssigungsbehälter (12) abdeckt, aufweist, um Gemengematerialien auf der stabilen Gemengeschicht (53) abzulagern, und eine untere Auslaßöffnung (42) zum Abziehen verflüssigten Gemenges aus dem Verflüssigungsbehälter (12) aufweist, der drehbar um eine im wesentlichen senkrechte Achse montiert ist,
**dadurch gekennzeichnet**,
daß die Vorrichtung weiterhin als Vorwärmkessel einen Drehrohrofen (10) aufweist mit einem langgestreckten, geneigten, zylindrischen Kessel, der drehbar um seine zylindrische Achse montiert ist, Einrichtungen (13, 14) zum Zuführen von Gemengematerial dem ersten Ende des Drehrohrofens (10) vorhanden sind und daß der Gemengeverflüssigungsbehälter (12) am gegenüberliegenden Ende des Drehrohrofens (10) angeordnet ist, um Gemengematerialien aus dem Drehrohrofen (10) in dem Verflüssigungsbehälter (12) abzulagern, und ein Übergang zwischen dem Drehrohrofen (10) und dem Verflüssigungsbehälter (12) vorhanden ist mit einer Gemengezuführrinne (50), die in der Öffnung (47) angeordnet ist und die am Ausgangsende der Rinne (50) eine schwenkbare Prallplatte (71) aufweist, und mit einer Nasenteilverlängerung (61) an einem Abgasschacht (48), wobei das Nasenteil (61) so angeordnet ist, daß es die Abgase in einen oberen Teil des Drehrohrofens (10) ablenkt, weg von den Gemengematerialien (60), und das den Drehrohrofen (10) gegenüber Übertragung von Strahlungswärme aus dem Verflüssigungsbehälter (12) abschirmt, und der Abgasschacht (48) sich von der Öffnung (47) im Deckel (43) aus erstreckt.

**12.** Vorrichtung nach Anspruch 11,
**dadurch gekennzeichnet**,
daß der Abgasschacht (48) einen einstellbaren Schieber (62) im Abgasdurchgang des Übergangsbereiches aufweist.

**13.** Vorrichtung nach Anspruch 11,
**dadurch gekennzeichnet**,
daß am Eingang der Gemengezuführrinne (50) eine schwenkbare Umleitungsklappe (73) vorhanden ist, um Gemengematerialien in eine Auslaßrinne (74) umzuleiten.

**Revendications**

**1.** Procédé de liquéfaction de matières de charge pulvérulentes dans un récipient de liquéfaction (12) en déposant, à travers une ouverture (47) dans un couvercle (43) couvrant le récipient de liquéfaction (12), des matières de charge qui ont été préchauffées par récupération de chaleur à partir d'un courant de gaz d'échappement ou résiduaire sur une couche stable (53) de matière de charge entourant une cavité dans le récipient de liquéfaction (12), en fournissant de la chaleur de combustion à la cavité du récipient de liquéfaction (12) par la combustion d'un combustible sensiblement dépourvu d'azote avec de l'oxygène en vue de liquéfier les matières de charge déposées et de permettre à la composition liquéfiée de s'écouler par-dessus la couche de matière de charge stable (53) vers une ouverture de sortie (41, 42) du récipient de liquéfaction (12) en réglant la vitesse à laquelle les matières de charge sont introduites dans le récipient de liquéfaction (12), de manière à maintenir la couche de matière de charge stable sensiblement constante,
caractérisé en ce que
on fait passer des matières de charge pulvérulentes dans un récipient de préchauffage (10) et, dans ce récipient de préchauffage (10), on expose directement les matières de charge au courant de gaz d'échappement ou résiduaire susmentionné tout en agitant les matières de charge de manière à chauffer ces matières de charge, on fait passer les matières de charge chauffées du récipient de préchauffage (10) dans une goulotte d'alimentation en matière de charge (50) logée dans l'ouverture

EP 0 132 654 B1

(47) précitée, de manière à faire parvenir les matières de charge dans le récipient de liquéfaction (12), lorsque la fusion de la matière de charge a commencé mais avant qu'une adhérence substantielle entre des particules de matière de charge se soit développée et on fait passer le courant de gaz d'échappement ou résiduaire du récipient de liquéfaction (12) dans le récipient de préchauffage (10) par une conduite d'échappement (48) s'étendant depuis l'ouverure (47) et possédant un nez (61) qui dirige le gaz d'échappement dans une partie supérieure du récipient de préchauffage (10) à l'écart des matières de charge et mettant le récipient de préchauffage (10) à l'abri d'un transfert de chaleur radiante en provenance du récipient de liquéfaction (12) et on utilise la totalité des produits de combustion à haute température ayant passé du récipient de liquéfaction (12) dans le récipient de préchauffage (10) comme seule source de chaleur pour préchauffer le gaz d'échappement précité à une vitesse relativement faible, de manière à maximiser le transfert de chaleur du gaz d'échappement et on évacue le gaz d'échappement du récipient de préchauffage (10).

2.  Procédé suivant la revendication 1, caractérisé en ce que le gaz d'échappement est évacué du récipient de préchauffage (10) après que la température du gaz d'échappement est descendue en-dessous du point de condensation de la vapeur d'eau y contenue.

3.  Procédé suivant la revendication 1, caractérisé en ce que les matières de charge sont des matières vitrifiables.

4.  Procédé suivant la revendication 1, caractérisé en ce que les gaz qui ont traversé le récipient de préchauffage (10) sont sensiblement dépourvus d'azote et d'azote emprisonné dans la purge provenant des matières passant à travers le récipient de préchauffage (10).

5.  Procédé suivant la revendication 1, caractérisé en ce que les matières de charge sont transportées à travers le récipient de préchauffage (10) sous un angle aigu par rapport à l'horizontale et avec une vitesse réglée, en une manière telle que les matières de charge qui ont été chauffées jusqu'à une température inférieure à celle à laquelle une phase fondue provoque l'adhérence de particules de charge les unes aux autres, soient évacuées du récipient de préchauffage (10) et déposées sur la couche de charge stable (53) sous un angle aigu par rapport à la verticale dans le récipient de liquéfaction (12), où la proportion de chaleur transférée à la charge est augmentée pour élever sa température de manière à faire passer les matières de charge à l'état liquéfié, après quoi la charge liquéfiée s'écoule hors du récipient de liquéfaction (12).

6.  Procédé suivant les revendications 1 à 5, caractérisé en ce qu'une partie des matières de charge, constituée d'un matériau source de silice et d'un matériau source de sodium, est introduite dans le récipient de liquéfaction (12), une autre partie des matières de charge, constituée d'un matériau source de carbonate, est introduite dans le récipient de préchauffage (10) où le matériau source de carbonate est chauffé pour calciner au moins une partie du carbonate, puis on introduit la matière calcinée chaude depuis le récipient de préchauffage (10) dans le récipient de liquéfaction (12) et on chauffe la matière calcinée avec le matériau source de silice et le matériau source de sodium dans le récipient de liquéfaction (12), de manière à liquéfier les matières de charge.

7.  Procédé suivant la revendication 6, caractérisé en ce que le matériau source de silice n'est pas directement introduit dans le récipient de liquéfaction (12) mais traverse le récipient de préchauffage (10) de manière à être chauffé tout au long de celui-ci avec le matériau source de carbonate.

8.  Procédé suivant les revendications 1 à 7, caractérisé en ce que les matières introduites dans le récipient de préchauffage sont portées à au moins 870°C (1600°F).

9.  Procédé suivant les revendications 1 à 8, caractérisé en ce que les matières vitrifiables comprennent de la soude et le transfert depuis le récipient de préchauffage (10) dans le récipient de liquéfaction (12) a lieu lorsque la charge a atteint une température d'environ 480°C (900°F) à 760°C (1400°F).

10. Procédé suivant les revendications 1 à 9, caractérisé en ce que de la soude caustique fondue est introduite dans le récipient de liquéfaction (12).

14

**11.** Appareil de liquéfaction de matières de charge pulvérulentes, destiné à la mise en oeuvre du procédé suivant la revendication 1, comprenant un récipient de liquéfaction (12), une cavité chauffée encerclée d'une couche stable (53) de matières de charge et comportant une ouverture d'entrée supérieure (47) prévue dans un couvercle immobile (43) couvrant le récipient de liquéfaction (12) pour permettre le dépôt de matières de charge sur la couche de charge stable (53) et une ouverture de sortie inférieure (42) pour évacuer de la charge liquéfiée hors du récipient de liquéfaction (12) qui est monté à rotation autour d'un axe sensiblement vertical,
caractérisé en ce que
l'appareil comprend en outre, à titre de récipient de préchauffage, un four rotatif (10) comprenant un récipient cylindrique allongé et incliné, monté à rotation autour de son axe cylindrique, des moyens (13, 14) pour amener de la matière de charge à une première extrémité du four rotatif (10), le récipient de liquéfaction (12) de la charge étant situé à l'extrémité opposée du four rotatif en vue du dépôt de matières de charge depuis le four rotatif (10) dans le récipient de liquéfaction (12) et une transition est prévue entre le four rotatif (10) et le récipient de liquéfaction (12), transition qui comprend une goulotte à charge (50) logée dans ladite ouverture (47) et possédant une chicane pivotable (71) mise en place à l'extrémité sortie de la goulotte (50) et une extension en forme de nez (61) d'un conduit d'échappement (48), où le nez (61) est situé en une manière telle qu'il dirige les gaz d'échappement ou résiduaires dans une partie supérieure du four rotatif (10) à l'écart des matières de charge (60) et sert à protéger le four rotatif (10) d'un transfert de chaleur radiante depuis le récipient de liquéfaction (12) et ledit conduit d'échappement (48) s'étend depuis ladite ouverture (47) dans le couvercle (43).

**12.** Appareil suivant la revendication 11, caractérisé en ce que le conduit d'échappement (48) comprend un registre ou tiroir réglable (62) dans le passage d'échappement de la section de transition.

**13.** Appareil suivant la revendication 11, caractérisé en ce qu'une barrière ou porte de déviation (73) est montée à l'entrée de la goulotte à charge (50) pour dévier de la matière de charge vers une goulotte d'échappement (74).

FIG. 1

FIG. 2

FIG. 3

FIG. 4